# DEMANDE DE BREVET EUROPEEN

(11) **EP 3 187 759 A1**
(43) Date de publication de la demande: **05.07.2017**
(21) Numéro de dépôt: 16306819.0
(22) Date de dépôt: 27.12.2016
(51) Int. Cl.: F16K 31/04

(54) **DISPOSITIF DE TRANSMISSION DE MOUVEMENT PAR ENGRENAGE ET SYSTÈME D'ACTIONNEMENT LE COMPRENANT**

(30) Priorité: 29.12.2015 FR 1563442
(71) Demandeur: Sogefi Air & Refroidissement France, 78280 Guyancourt (FR)
(72) Inventeur: ROCH, Ludovic, 68240 SIGOLSHEIM (FR); DEPASSE, Frédéric, 67600 SELESTAT (FR)
(74) Mandataire: Nuss, Laurent

(57) **Abrégé**

La présente invention a pour objet un dispositif de transmission de mouvement entre un premier organe denté, rotatoire et entraîneur, et un second organe denté, rotatoire et entraîné, la transmission de mouvement étant limitée à une plage de rotation délimitée par des positions angulaires en rotation de début et de fin de plages de mouvement pour lesdits organes dentés.

Dispositif (1) caractérisé en ce que le second organe denté (3) comporte un moyen ressort (8) le sollicitant en rotation dans un sens opposé au sens de rotation positif amenant ledit second organe denté (3) de sa position angulaire de début de plage de mouvement opérationnelle vers sa position angulaire de fin de plage de mouvement opérationnelle, et en ce que le premier organe denté (2) comporte une portion d'arc périphérique particulière (4') qui est dépourvue de dents, cette portion d'arc périphérique particulière (4') s'étendant circonférentiellement au-delà de la fin ou de la dernière dent (6') de la portion d'arc périphérique dentée (4) dudit premier organe (2), vue dans le sens de rotation positif de ce dernier.

## Description

La présente invention concerne le domaine de la transmission de mouvement, de couple, de puissance en relation avec des dispositifs engrenants, préférentiellement avec fourniture simultanée d'un rapport de transmission réducteur, et a pour objet un dispositif de transmission de mouvement par engrènement avec position de sécurité, ainsi qu'un système de contrôle, de distribution et/ou de réglage du débit de l'écoulement d'un fluide intégrant un tel dispositif.

Les dispositifs du type précité sont notamment connus et mis en oeuvre dans le contexte de la régulation de l'écoulement de fluide (débit, distribution, orientation) pour transmettre, avec démultiplication, un couple ou un mouvement entre un moyen actif d'actionnement (arbre d'entrée, actionneur électrique, pneumatique, hydraulique) et au moins un organe de régulation et/ou de distribution tel qu'une vanne ou analogue, éventuellement multivoies.

Ces organes de régulation présentent généralement un état ou une position de sécurité correspondant à un réglage du débit ou une configuration de distribution de l'organe préservant les composants, modules, circuits ou analogues alimentés ou traversés par le fluide concerné.

Différents dispositifs aptes et destinés à éviter un positionnement ou une configuration anormal(e) ou à forcer l'organe de régulation dans une position de sécurité, sont déjà connus et mis en oeuvre.

On connaît ainsi des actionneurs intégrant ou directement associés à des moyens élastiques qui agissent sur l'axe d'entraînement de l'actionneur pour l'amener ou le ramener par défaut à une position initiale.

On connaît également des moyens du type ressort de rappel qui sont aptes et destinés à agir sur un composant intermédiaire d'une chaîne cinématique de transmission de mouvement entre un actionneur et un organe actionné, pour ramener automatiquement ce dernier dans une position de sécurité lorsque certaines conditions sont vérifiées ou ne sont plus vérifiées, ou qu'un dysfonctionnement ou une situation anormale est relevé(e). Les documents FR 2 839 164 et FR 2 901 005 par exemple divulguent de telles solutions.

Toutefois, dans les solutions connues précitées, le moyen élastique ou ressort doit pouvoir fournir une force ou un couple de rappel suffisant pour entraîner non seulement l'organe auquel il est associé, mais également tous les composants de la chaîne cinématique et l'actionneur. Il en résulte un coût de revient élevé pour la réalisation de cette fonction de sécurité et donc la nécessité soit de surdimensionner notablement l'actionneur pour surmonter, en fonctionnement normal, constamment l'action parasite (sollicitation contraire) du moyen de rappel, soit de prévoir un moyen additionnel de rétention en fonctionnement normal et de libération conditionnelle dudit moyen de rappel, entraînant une complexité structurelle et un encombrement plus important.

La présente invention a pour but de pallier au moins les principaux inconvénients des solutions existantes précitées, en particulier en termes de coûts, de complexité constructive et d'encombrement.

A cet effet, l'invention a pour objet un dispositif de transmission de mouvement par liaison cinématique avec entraînement entre un premier organe denté, rotatoire et entraîneur, et un second organe denté, rotatoire et entraîné, la transmission de mouvement étant limitée à une plage de rotation déterminée pour l'un au moins des deux organes, qui correspondent à une fraction de tour pour ledit ou chacun desdits organes, ainsi qu'à des plages de mouvement opérationnelles respectives pour ces derniers, et qui sont délimitées par des positions angulaires en rotation de début et de fin de plages de mouvement pour lesdits premier et second organes dentés, la liaison cinématique avec entraînement étant obtenue, sur l'étendue des plages de mouvement opérationnelles précitées, par engrènement mutuel de portions d'arc périphérique dentées d'extensions angulaires respectivement correspondantes desdits premier et second organes dentés, ces portions d'arcs périphériques dentées présentant chacune des première et dernière dents respectives,
dispositif caractérisé en ce que le second organe denté comporte ou est opérationnellement associé à un moyen ressort ou élastique le sollicitant en rotation dans un sens opposé au sens de rotation positif amenant ledit second organe denté de sa position angulaire de début de plage de mouvement opérationnelle vers sa position angulaire de fin de plage de mouvement opérationnelle, et en ce que le premier organe denté comporte une portion d'arc périphérique particulière qui ne permet pas l'établissement d'une liaison cinématique avec entraînement avec le second organe denté, préférentiellement qui est dépourvue de dents, cette portion d'arc périphérique particulière s'étendant circonférentiellement au-delà de la fin ou de la dernière dent de la portion d'arc périphérique dentée dudit premier organe, vue dans le sens de rotation positif de ce dernier.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

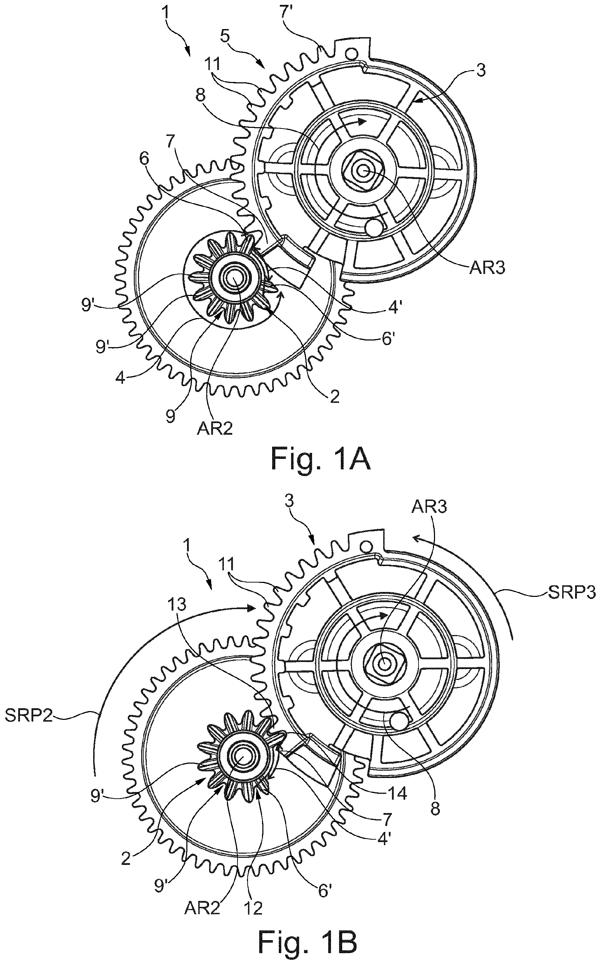

les figures 1A à 1D sont des vues en élévation frontale (selon la direction des axes de rotation des organes dentés) des deux composantes constitutives essentielles du dispositif de transmission de mouvement selon un premier mode de réalisation de l'invention, ces figures illustrant le dispositif dans plusieurs configurations correspondant à des positions relatives différentes entre les deux organes dentés (1A : début de l'engrènement et de la plage de mouvement opérationnelle du dispositif / 1B : configuration du dispositif après une rotation de 10° du second organe denté / 1C : configuration du dispositif après une rotation de 90° du second organe denté / 1D : configuration du dispositif juste après débrayage et début du mouvement de rappel) ;
la figure 2 est une vue de détail, à une échelle différente, de la zone d'engrènement entre les deux organes, au début de la plage de mouvement opérationnelle (détail de la figure 1A) ;
la figure 3 est une vue en élévation frontale, similaire à la figure 1A, mais selon une direction opposée, d'un autre mode de réalisation du dispositif selon l'invention, dans une configuration correspondant au début de la plage de mouvement opérationnelle ;
les figures 4A et 4B sont des vues partielles, à une échelle différente, de l'objet représenté figure 3, juste avant le début et après la fin du mouvement de rappel du second organe denté respectivement ;
la figure 4C est une vue de détail d'une partie du second organe denté représenté figures 4A et 4B, et,
la figure 5 est une vue en coupe et en élévation latérale d'un système d'actionnement d'une vanne comprenant un dispositif de transmission de mouvement selon l'invention.

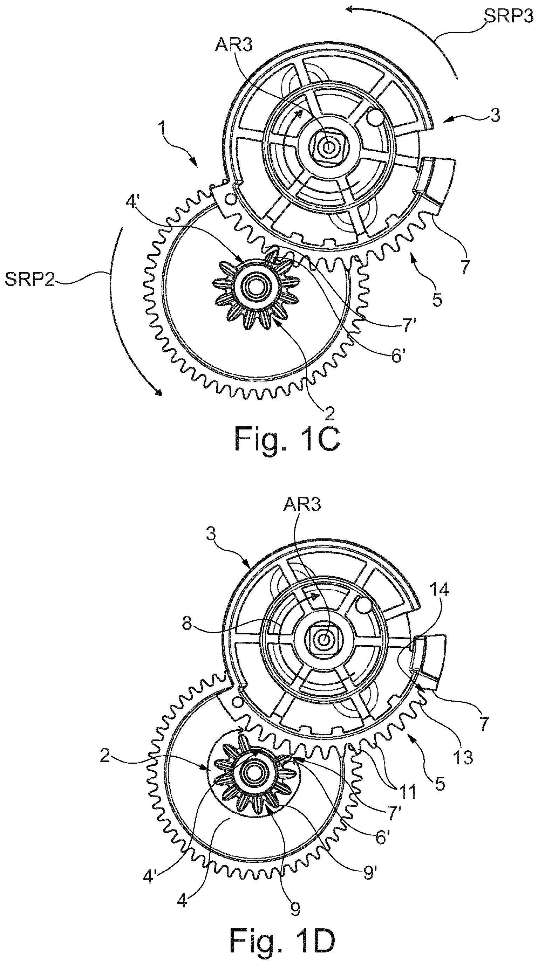

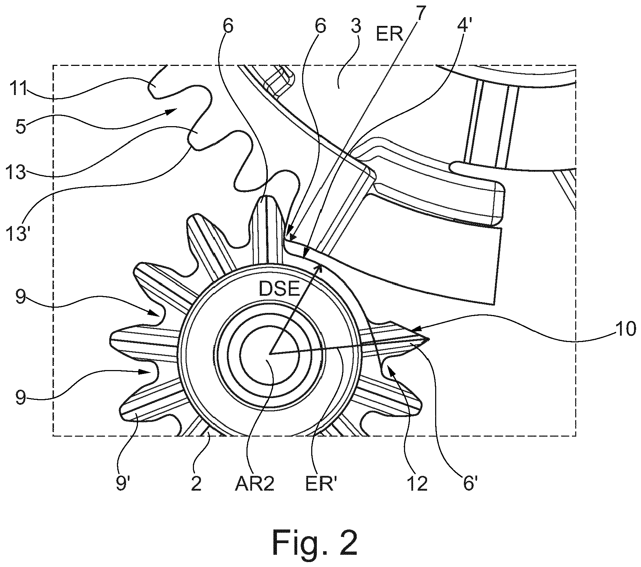

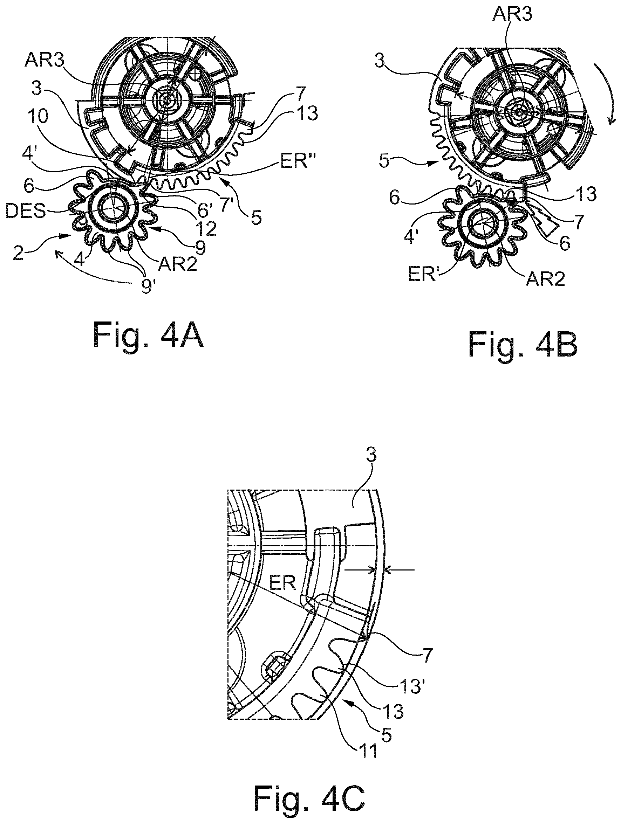

Les figures 1, 3 et 5, et partiellement les figures 2 et 4, illustrent un dispositif 1 de transmission de mouvement par liaison cinématique avec entraînement entre un premier organe denté 2, rotatoire et entraîneur, et un second organe denté 3, rotatoire et entraîné, la transmission de mouvement étant limitée à une plage de rotation déterminée pour au moins l'un des deux organes 2 et 3 (ce en fonction notamment de leur taille relative et du rapport de transmission à réaliser entre eux).

Ces plages de rotation respectives correspondent à une fraction de tour pour ledit organe ou chacun desdits organes 2, 3, ainsi qu'à des plages de mouvement opérationnelles respectives pour ces derniers, et sont délimitées par des positions angulaires en rotation de début et de fin de plages de mouvement pour lesdits premier et second organes dentés 2 et 3. La liaison cinématique avec entraînement est obtenue, sur l'étendue des plages de mouvement opérationnelles précitées, par engrènement mutuel de portions d'arc périphérique dentées 4 et 5 d'extensions angulaires respectivement correspondantes desdits premier et second organes dentés 2 et 3, ces portions d'arcs périphériques dentées 4 et 5 présentant chacune des premières dents 6, 7 et dernières dents 6', 7' respectives.

Les axes de rotation AR2 et AR3 des deux organes dentés 2 et 3 sont préférentiellement parallèles entre eux et les deux organes dentés 2 et 3 présentent avantageusement des formes circulaires, bien qu'une forme en secteur de disque puisse également convenir pour le second organe denté 3.

Conformément à l'invention, le second organe denté 3 comporte ou est opérationnellement associé à un moyen ressort ou élastique 8 le sollicitant en rotation dans un sens opposé au sens de rotation positif SRP3 amenant ledit second organe denté 3 de sa position angulaire de début de plage de mouvement opérationnelle vers sa position angulaire de fin de plage de mouvement opérationnelle. De plus, le premier organe denté 2 comporte une portion d'arc périphérique particulière 4' qui ne permet pas l'établissement d'une liaison cinématique avec entraînement avec le second organe denté 3, préférentiellement qui est dépourvue de dents, cette portion d'arc périphérique particulière 4' s'étendant circonférentiellement au-delà de la fin ou de la dernière dent 6' de la portion d'arc périphérique dentée 4 dudit premier organe 2, vue dans le sens de rotation positif SRP2 de ce dernier.

L'homme du métier comprend que, grâce aux dispositions précitées de l'invention, le dispositif 1 intègre une fonction de rappel automatique (représentée schématiquement par la flèche référencée 8 sur les figures 1A à 1D), qui est activée par simple rotation du premier organe denté 2 au-delà de sa plage de mouvement opérationnelle.

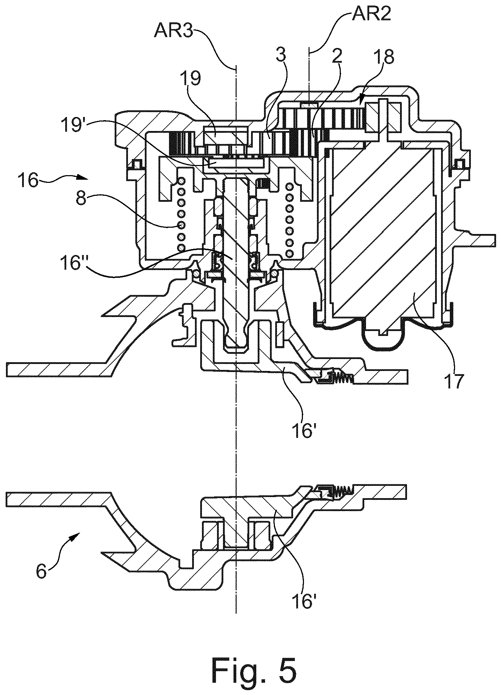

Plus précisément, cette rotation excessive volontaire (correspondant par exemple à une position dite de sécurité) entraîne de fait un débrayage entre le premier organe denté 2 et le second organe denté 3 et, sous l'effet du moyen 8 de rappel (voir figures 1 et 5), calibré de manière adéquate, ledit second organe 3 est automatiquement ramené en retour par rotation inverse (par rapport au sens SRP3) vers sa position de début de plage de mouvement opérationnelle, entraînant simultanément l'ensemble des composants qui lui sont reliés cinématiquement et situés en aval.

Néanmoins, le débrayage précité, en désolidarisant cinématiquement les organes 2 et 3 entre eux, évite au moyen 8 d'avoir à entraîner également le premier organe 2 et les éventuels composants de la chaîne cinématique s'étendant en amont de cet organe 2 (et comprenant par exemple un actionneur 17), et permet ainsi de limiter le dimensionnement dudit moyen 8.

Par ailleurs, à l'exception d'une adaptation limitée de la réalisation du premier organe denté 2 et de la prévision du moyen de rappel 8, la réalisation de la fonction de sécurité précitée n'entraîne aucune modification constructive notable du dispositif 1 de transmission comprenant les deux organes 2 et 3, ni une augmentation de son encombrement (le moyen 8 pouvant être aisément intégré ou associé intimement au second organe denté 3).

En accord avec une caractéristique avantageuse de l'invention, permettant notamment une réalisation de faible taille du premier organe denté 2, il est prévu que la portion d'arc périphérique dentée 4 et la portion d'arc périphérique particulière 4' présentent des extensions circonférentielles complémentaires et couvrent ensemble le pourtour du premier organe dentée 2, la suppression de la liaison cinématique avec entraînement étant effective dès le désengagement des dernières dents respectives 6' et 7' des portions d'arcs périphériques dentées 4 et 5 des premier et second organes 2 et 3, ou dernières dents, marquant la fin des plages de mouvement opérationnelles respectives de ces derniers.

Il peut être prévu que la portion d'arc périphérique dentée 5 présente plus de dents 11 et une extension linéaire plus importante que la portion d'arc périphérique dentée 4. Dans ce cas, certaines desdites dents 11 n'engrènent jamais avec les dents 9' de ladite portion 4, mais une certaine liberté d'ajustement en rotation entre les deux organes 2 et 3 est disponible (figures 1A à 1D).

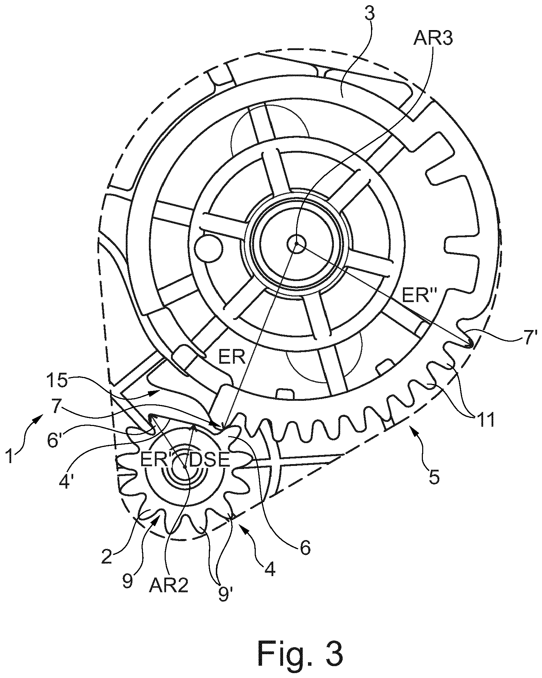

Néanmoins, comme l'illustre la figure 3, le nombre de dents et l'extension linéaire des portions 4 et 5 sont préférentiellement, mais non obligatoirement, similaires.

La position de fin du mouvement de rappel du second organe denté 3, généré par le moyen 8, peut être déterminé par un système de butée particulier, les deux portions d'arcs périphériques dentées 4 et 5 des deux organes 2 et 3 débutant leur engrènement mutuel (début des plages de mouvement opérationnelles) suite à un déplacement initial du premier organe denté 2 mettant en engagement les premières dents 6 et 7.

Toutefois, en accord avec une variante de réalisation très avantageuse de l'invention, ressortant notamment des figures 1, 2 et 3, les portions d'arcs périphériques dentée 4 et particulière 4' du premier organe denté 2 présentent des extensions circonférentielles respectives telles que la fin du mouvement de libre rotation du second organe denté 3 - mouvement effectué sous l'action du moyen élastique ou ressort 8 et initié après dépassement, dans leur sens de rotation positif respectif SRP2 et SRP3, des positions angulaires en rotation des deux organes dentés 2 et 3 correspondant à la fin de la plage de mouvement opérationnelle du dispositif 1 - est déterminée par la venue en engagement des dents respectives 6 et 7 des portions d'arc périphérique dentées 4, 5 desdits premier 2 et second 3 organes, ou premières dents, marquant le début des plages de mouvement opérationnelles de ces derniers.

Ainsi, comme le montrent les trois figures précitées, la forme de la dernière dent 6' et l'étendue de la portion d'arc périphérique particulière 4' sont telles que, dans la position en rotation du premier organe denté 2 correspondant au déclenchement du débrayage entre ce dernier et le second organe denté 3, la première dent 6 du premier organe denté 2 s'étend à l'intérieur du cercle virtuel associé audit second organe denté 3 et passant par le sommet de la première dent 7 de ce dernier. De plus, aucun mouvement additionnel du premier organe denté 2 n'est nécessaire pour retrouver la configuration du dispositif 1 correspondant au début de la plage de mouvement opérationnelle.

Afin d'éviter, lors du mouvement de rotation en retour du second organe denté 3 sous l'action du moyen 8, que les dents 11 de la portion d'arc périphérique dentée 5 ne s'usent par frottement, voire se retrouvent bloquées, contre le premier organe denté 2, ce dernier présente avantageusement au niveau de sa portion d'arc périphérique particulière 4' une surface extérieure dont la distance DSE à l'axe de rotation AR2 dudit premier organe 2 est au plus égale à celle des fonds de denture ou creux courants 9 de ce dernier par rapport à cet axe AR2. Le but recherché est de réduire et si possible d'éviter tout contact entre les dents courantes 11 du second organe 3 et la surface de la portion d'arc 4' dépourvue de dents du premier organe 2 lors du mouvement de rappel sollicité par le moyen 8.

Selon une autre caractéristique de l'invention, permettant de garantir (compte tenu des tolérances de montage) et de faciliter le réembrayage des deux organes dentés 2 et 3 et simultanément de limiter davantage le risque d'usure lié aux frottements durant le mouvement de rappel, la première dent 7 de la portion d'arc périphérique dentée 5 du second organe 3 présente une hauteur ou extension radiale ER par rapport à l'axe de rotation AR3 dudit second organe 3 plus importante que les autres dents courantes 11 de cet organe 3 (figures 2 et 4C).

Pour limiter l'extension de la portion d'arc périphérique 4' dépourvue de dents (et donc la taille de l'organe 2), tout en garantissant un positionnement adéquat de la première dent 6 pour le réembrayage, la forme et les dimensions de la dernière dent 6' du premier organe denté 2 peuvent être optimisées.

Ainsi, il peut être prévu que la dernière dent 6' de la portion d'arc périphérique dentée 4 du premier organe 2 présente une hauteur ou extension radiale ER' inférieure à celle des autres dents courantes 9' dudit premier organe 2 et fait état, du côté tourné vers la portion d'arc périphérique 4' dépourvue de dents, d'un flanc plat ou concave 10 débouchant sur cette dernière (figures 2, 3, 4A et 4B).

De plus, cette dernière dent 6' n'étant sollicitée que dans des cas exceptionnels et rares, son niveau de qualité de réalisation en termes de résistance et de revêtement peut être maintenu faible.

Conformément à une autre caractéristique de l'invention, oeuvrant également en faveur d'une limitation d'un risque de frottement entre les deux organes dentés 2 et 3 lors du mouvement de rappel du second organe 3, il peut être prévu que la dernière dent 7' de la portion d'arc périphérique dentée 5 du second organe 3 présente une hauteur ou extension radiale ER" plus importante que les autres dents courantes 11 dudit second organe 3, le fond de denture ou creux 12 qui précède la dernière dent 6' de la portion d'arc périphérique dentée 4 du premier organe 2 présentant une forme et une profondeur ou dépression radiale spécifiques adaptées (figures 1, 3, 4A et 4B).

En vue de faciliter de manière additionnelle le réembrayage, il peut en outre être prévu, comme le montrent les figures 2 et 3, que la seconde dent 13 de la portion d'arc périphérique dentée 5 du second organe 3, qui définit en coopération avec la première dent 7 le premier creux ou fond de denture 14 de ladite portion d'arc périphérique dentée 5, présente au niveau de son sommet, sur son flanc tourné vers ledit premier creux ou fond de denture 14, un biseau ou chanfrein 13', définissant une surface plane ou concave.

En accord avec le mode de réalisation représenté figure 3, le second organe denté peut comporter, en amont de la première dent 7 de sa portion d'arc périphérique dentée 5, c'est-à-dire située circonférentiellement au-delà de cette première dent 7 dans le sens opposé au sens de rotation positif SRP3 dudit second organe denté 3, une surface 15 en creux ou renfoncée radialement, fournissant une zone dégagée apte à absorber un éventuel rebond du premier organe denté 2 suite à l'engagement mutuel sous impact des premières dents 6 et 7 des portions d'arcs périphériques dentées 4 et 5 des premier et second organes 2 et 3 en fin de mouvement rotatoire libre sous l'action du moyen élastique 8, tel que par exemple un ressort sous contrainte, après débrayage mutuel desdits organes 2 et 3 au-delà de leurs plages de mouvement opérationnelles respectives.

Bien entendu, le dimensionnement des premier et second organes dentés et de leurs axes et les matériaux (plastiques, métalliques) utilisés pour leur réalisation, dépendent de l'utilisation envisagée et notamment des couples à transmettre et à fournir.

En termes de construction pratique, il est néanmoins préférable, comme cela ressort schématiquement des figures annexées, que la portion d'arc périphérique dentée 5 du second organe 3 s'étende circonférentiellement sur une fraction limitée du pourtour de ce dernier, avantageusement au plus sur 180°, préférentiellement sur environ 90°, et que la portion d'arc périphérique particulière 4', préférentiellement dépourvu de dents, du premier organe denté 2 s'étende angulairement sur au moins 60°, préférentiellement sur environ 90° au moins.

Par ailleurs, et en particulier dans les applications préférées du dispositif 1 visées par l'invention (commande d'un organe 16' de contrôle/régulation de la circulation d'un fluide au moyen d'un actionneur 17), le rapport de transmission entre le premier organe rotatoire denté 2 et le second organe rotatoire denté 3 est inférieur à 1/2, préférentiellement compris entre 1/3 et 1/5.

Bien entendu, chacun des deux organes dentés 2 et 3 peut soit faire partie d'un ensemble de plusieurs organes dentés (notamment être formé d'un seul tenant avec un autre organe denté de diamètre différent), soit être monté sur un axe d'entraînement, ou encore combiné les deux réalisations précitées.

L'invention vise également, comme représenté à titre d'exemple sur la figure 5, un système d'actionnement d'un dispositif 16 de contrôle, de distribution et/ou de réglage de l'écoulement d'un fluide gazeux ou liquide, tel qu'une vanne à boisseau, à tiroir, à clapet ou analogue, comprenant un dispositif 1 de transmission de mouvement par engrènement, préférentiellement avec un rapport de transmission différent de 1, avec un premier organe denté 2, rotatoire et entraîneur, et un second organe denté 3, rotatoire et entraîné, le premier organe 2 étant solidaire d'un axe d'entraînement AR2, le cas échéant l'axe de sortie d'un actionneur ou d'un ensemble moto-réducteur 18, et le second organe 3 étant solidaire d'un axe entraîné AR3, le cas échéant l'axe support et de guidage d'un organe actif 16' du dispositif 16 de contrôle, de distribution et/ou de réglage.

Conformément à l'invention, les premier et second organes rotatoires dentés 2 et 3 forment ensemble un dispositif de transmission de mouvement 1 tel que décrit précédemment.

Selon un mode de réalisation avantageux, ressortant également de la figure 5, le premier organe denté 2 consiste en un pignon de sortie d'un actionneur ou d'un ensemble moto-réducteur 18 intégrant un actionneur 17 et le second organe denté 3 consiste en une roue directement solidaire de l'axe support et de guidage AR3 de l'organe actif 16' du dispositif de contrôle, de distribution et/ou de réglage 16 commandé, ladite roue 3 comportant un secteur denté 5 s'étendant sur une portion d'arc de la périphérie de cette roue, éventuellement sous forme de pièce rapportée.

Préférentiellement, le système peut correspondre à un module fonctionnel complet et comprend alors également un actionneur 17, préférentiellement rotatif et de type électrique, et un moyen de pilotage dudit actionneur 17 apte et destiné, en réponse à un signal de défaut ou de dysfonctionnement, à commander l'actionneur 17 de telle manière que les premier et second organes rotatoires dentés 2 et 3 soient amenés au-delà de leur plage de mouvement opérationnelle.

Comme le montre la figure 5, le dispositif 16 peut, par exemple, consister en une vanne rotative à boisseau 16' présentant une construction, en particulier un axe d'entraînement 16" et des moyens d'étanchéité, telle que décrite et représentée dans le document EP-A-2 910 826.

La position en rotation du boisseau ou clapet 16' peut, par exemple, être relevée par l'intermédiaire d'un capteur 19 détectant la position angulaire d'un marqueur magnétique 19' solidaire dudit boisseau ou clapet, ou de son axe de commande 16".

Comme représenté à titre illustratif sur la figure 5 et selon une construction préférée de l'invention, le système précité constitue un dispositif d'entraînement par engrenage d'une vanne à boisseau 16 pour un système de refroidissement d'un moteur à combustion interne, comprenant :
- un premier ensemble de roues dentées (le premier organe 2 et les roues dentées faisant partie du moto-réducteur 18) connecté cinématiquement à l'arbre de sortie de l'actionneur 17 et un deuxième ensemble de roues dentées (le second organe 3 et un éventuel pignon denté engrenant avec lui et solidaire de l'axe de commande 16" du boisseau ou clapet 16') connecté cinématiquement à l'arbre de rotation du boisseau et
- un actionneur électrique 17 qui entraîne en rotation l'engrenage formé par les deux ensembles précités, à l'encontre d'un moyen ressort 8 (agissant sur le deuxième ensemble de roues dentées), sur une plage donnée entre une première et une deuxième position.

Selon l'invention, l'actionneur électrique 17 positionne l'engrenage au-delà de sa plage de fonctionnement normale en cas de dysfonctionnement (mécanique ou autre) pour désengager le premier et le deuxième ensemble de roues dentées et ramener le deuxième ensemble de roues dentées dans sa position initiale (boisseau dans sa position initiale ou de sécurité) par la seule force de rappel du ressort 8 (le premier ensemble de roues dentées n'étant pas entrainé par le ressort), le premier ensemble de roues dentées étant découplé du premier ensemble.

Ainsi, une position de sécurité est atteinte par un positionnement des engrenages au-delà de la plage de rotation normale de ces derniers (correspondant au pivotement normale du boisseau). Dans cette position, le système d'engrenage est dans une configuration mutuellement désengagée de ses deux ensembles constitutifs et c'est un système de rappel, typiquement un ressort précontraint qui ramène le système d'engrenage dans sa position initiale.

L'avantage de l'invention est de supprimer toute les forces qui viseraient à s'opposer à la force de rappel du moyen ressort 8, puisque lors du retour de l'engrenage intermédiaire sous l'effet du ressort de rappel, celui-ci n'engage pas la roue dentée de sortie 2 adjacente. Ainsi, on limite les risques de vieillissement des pièces (ressort, engrenage, ...) et il n'est pas nécessaire de surdimensionner le moyen 8 ni l'actionneur 17 (qui contre l'action du moyen 8 en fonctionnement normal).

Enfin, l'invention porte aussi sur un procédé de commande d'un système d'actionnement tel que décrit précédemment comprenant un dispositif de transmission de mouvement 1 tel que décrit précédemment, un actionneur 17 et un moyen de pilotage de ce dernier (non représenté).

Ce procédé est caractérisé en ce qu'il consiste, en cas de fourniture d'un signal de défaut ou de dysfonctionnement, à commander l'actionneur 17, par le biais du moyen de pilotage, de telle manière que les premier et second organes rotatoires dentés 2 et 3 du dispositif de transmission de mouvement 1 sont amenés au-delà de leur plage de mouvement opérationnelle, entraînant un débrayage entre eux.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de transmission de mouvement par liaison cinématique avec entraînement entre un premier organe denté, rotatoire et entraîneur, et un second organe denté, rotatoire et entraîné, la transmission de mouvement étant limitée à une plage de rotation déterminée pour l'un au moins des deux organes, qui correspondent à une fraction de tour pour ledit ou chacun desdits organes, ainsi qu'à des plages de mouvement opérationnelles respectives pour ces derniers, et qui sont délimitées par des positions angulaires en rotation de début et de fin de plages de mouvement pour lesdits premier et second organes dentés, la liaison cinématique avec entraînement étant obtenue, sur l'étendue des plages de mouvement opérationnelles précitées, par engrènement mutuel de portions d'arc périphérique dentées d'extensions angulaires respectivement correspondantes desdits premier et second organes dentés, ces portions d'arcs périphériques dentées présentant chacune des premières et dernières dents respectives,
dispositif (1) **caractérisé en ce que** le second organe denté (3) comporte ou est opérationnellement associé à un moyen ressort ou élastique (8) le sollicitant en rotation dans un sens opposé au sens de rotation positif (SRP3) amenant ledit second organe denté (3) de sa position angulaire de début de plage de mouvement opérationnelle vers sa position angulaire de fin de plage de mouvement opérationnelle, et **en ce que** le premier organe denté (2) comporte une portion d'arc périphérique particulière (4') qui ne permet pas l'établissement d'une liaison cinématique avec entraînement avec le second organe denté (3), préférentiellement qui est dépourvue de dents, cette portion d'arc périphérique particulière (4') s'étendant circonférentiellement au-delà de la fin ou de la dernière dent (6') de la portion d'arc périphérique dentée (4) dudit premier organe (2), vue dans le sens de rotation positif (SRP2) de ce dernier.

2. Dispositif de transmission selon la revendication 1, **caractérisé en ce que** la portion d'arc périphérique dentée (4) et la portion d'arc périphérique particulière (4') présentent des extensions circonférentielles complémentaires et couvrent ensemble le pourtour du premier organe dentée (2), la suppression de la liaison cinématique avec entraînement étant effective dès le désengagement des dernières dents respectives (6' et 7') des portions d'arcs périphériques dentées (4 et 5) des premier et second organes (2 et 3), ou dernières dents, marquant la fin des plages de mouvement opérationnelles respectives de ces derniers.

3. Dispositif de transmission selon l'une quelconque des revendications 1 et 2, **caractérisé en ce que** les portions d'arcs périphériques dentée (4) et particulière (4') du premier organe denté (2) présentent des extensions circonférentielles respectives telles que la fin du mouvement de libre rotation du second organe denté (3), mouvement effectué sous l'action du moyen élastique ou ressort (8) et initié après dépassement, dans leur sens de rotation positif respectif (SRP2 et SRP3), des positions angulaires en rotation des deux organes dentés (2 et 3) correspondant à la fin de la plage de mouvement opérationnelle du dispositif (1), est déterminée par la venue en engagement des dents respectives (6 et 7) des portions d'arc périphérique dentées (4, 5) desdits premier (2) et second (3) organes, ou premières dents, marquant le début des plages de mouvement opérationnelles de ces derniers.

4. Dispositif de transmission selon l'une quelconque des revendications 1 à 3, **caractérisé en ce que** le premier organe denté (2) présente, au niveau de sa portion d'arc périphérique particulière (4'), une surface extérieure dont la distance (DSE) à l'axe de rotation (AR2) dudit premier organe (2) est au plus égale à celle des fonds de denture ou creux courants (9) de ce dernier par rapport à cet axe (AR2).

5. Dispositif de transmission selon l'une quelconque des revendications 1 à 4, **caractérisé en ce que** la première dent (7) de la portion d'arc périphérique dentée (5) du second organe (3) présente une hauteur ou extension radiale (ER) par rapport à l'axe de rotation (AR3) dudit second organe (3) plus importante que les autres dents courantes (11) de cet organe (3).

6. Dispositif de transmission selon l'une quelconque des revendications 1 à 5, **caractérisé en ce que** la dernière dent (6') de la portion d'arc périphérique dentée (4) du premier organe (2) présente une hauteur ou extension radiale (ER') inférieure à celle des autres dents courantes (9') dudit premier organe (2) et fait état, du côté tourné vers la portion d'arc périphérique (4') dépourvue de dents, d'un flanc plat ou concave (10) débouchant sur cette dernière.

7. Dispositif de transmission selon l'une quelconque des revendications 1 à 6, **caractérisé en ce que** la dernière dent (7') de la portion d'arc périphérique dentée (5) du second organe (3) présente une hauteur ou extension radiale (ER") plus importante que les autres dents courantes (11) dudit second organe (3), le fond de denture ou creux (12) qui précède la dernière dent (6') de la portion d'arc périphérique dentée (4) du premier organe (2) présentant une forme et une profondeur ou dépression radiale spécifiques adaptées.

8. Dispositif de transmission selon l'une quelconque des revendications 1 à 7, **caractérisé en ce que** la seconde dent (13) de la portion d'arc périphérique dentée (5) du second organe (3), qui définit en coopération avec la première dent (7) le premier creux ou fond de denture (14) de ladite portion d'arc périphérique dentée (5), présente au niveau de son sommet, sur son flanc tourné vers ledit premier creux ou fond de denture (14), un biseau ou chanfrein (13'), définissant une surface plane ou concave.

9. Dispositif de transmission selon l'une quelconque des revendications 1 à 8, **caractérisé en ce que** le second organe denté (3) comporte, en amont de la première dent (7) de sa portion d'arc périphérique dentée (5), c'est-à-dire située circonférentiellement au-delà de cette première dent (7) dans le sens opposé au sens de rotation positif (SRP3) dudit second organe denté (3), une surface (15) en creux ou renfoncée radialement, fournissant une zone dégagée apte à absorber un éventuel rebond du premier organe denté (2) suite à l'engagement mutuel sous impact des premières dents (6 et 7) des portions d'arcs périphériques dentées (4 et 5) des premier et second organes (2 et 3) en fin de mouvement rotatoire libre sous l'action du moyen élastique (8), tel que par exemple un ressort sous contrainte, après débrayage mutuel desdits organes (2 et 3) au-delà de leurs plages de mouvement opérationnelles respectives.

10. Dispositif de transmission selon la revendication 1 à 9, **caractérisé en ce que** la portion d'arc périphérique dentée (5) du second organe (3) s'étend circonférentiellement sur une fraction limitée du pourtour de ce dernier, avantageusement au plus sur 180°, préférentiellement sur environ 90°, et **en ce que** la portion d'arc périphérique particulière (4'), préférentiellement dépourvu de dents, du premier organe denté (2) s'étend angulairement sur au moins 60°, préférentiellement sur environ 90° au moins.

11. Dispositif de transmission selon l'une quelconque des revendications 1 à 10, **caractérisé en ce que** le rapport de transmission entre le premier organe rotatoire denté (2) et le second organe rotatoire denté (3) est inférieur à 1/2, préférentiellement compris entre 1/3 et 1/5.

12. Système d'actionnement d'un dispositif de contrôle, de distribution et/ou de réglage de l'écoulement d'un fluide gazeux ou liquide, tel qu'une vanne à boisseau, à tiroir, à clapet ou analogue, comprenant un dispositif de transmission de mouvement par engrènement, préférentiellement avec un rapport de transmission différent de 1, avec un premier organe denté, rotatoire et entraîneur, et un second organe denté, rotatoire et entraîné, le premier organe étant solidaire d'un axe d'entraînement, le cas échéant l'axe de sortie d'un actionneur ou d'un ensemble moto-réducteur, et le second organe étant solidaire d'un axe entraîné, le cas échéant l'axe support et de guidage d'un organe actif du dispositif de contrôle, de distribution et/ou de réglage,
système **caractérisé en ce que** les premier et second organes rotatoires dentés (2 et 3) forment ensemble un dispositif de transmission de mouvement (1) selon l'une quelconque des revendications 1 à 11.

13. Système selon la revendication 12, **caractérisé en ce que** le premier organe denté (2) consiste en un pignon de sortie d'un actionneur ou d'un ensemble moto-réducteur (18) intégrant un actionneur (17) et **en ce que** le second organe denté (3) consiste en une roue directement solidaire de l'axe support et de guidage (AR3) de l'organe actif (16') du dispositif de contrôle, de distribution et/ou de réglage (16) commandé, ladite roue (3) comportant un secteur denté (5) s'étendant sur une portion d'arc de la périphérie de cette roue, éventuellement sous forme de pièce rapportée.

14. Système selon l'une quelconque des revendications 12 et 13, **caractérisé en ce qu'**il comprend également un actionneur (17), préférentiellement de type électrique, et un moyen de pilotage dudit actionneur (17) apte et destiné, en réponse à un signal de défaut ou de dysfonctionnement, à commander l'actionneur (17) de telle manière que les premier et second organes rotatoires dentés (2 et 3) sont amenés au-delà de leur plage de mouvement opérationnelle.

15. Procédé de commande d'un système d'actionnement selon l'une quelconque des revendications 12 à 14 comprenant un dispositif de transmission de mouvement selon l'une quelconque des revendications 1 à 11, un actionneur et un moyen de pilotage de ce dernier,
procédé **caractérisé en ce qu'**il consiste, en cas de fourniture d'un signal de défaut ou de dysfonctionnement, à commander l'actionneur (17), par le biais du moyen de pilotage, de telle manière que les premier et second organes rotatoires dentés (2 et 3) du dispositif de transmission de mouvement (1) sont amenés au-delà de leur plage de mouvement opérationnelle, entraînant un débrayage entre eux.
